# EUROPEAN PATENT APPLICATION

(11) **EP 3 812 129 A1**
(43) Date of publication of application: **28.04.2021**
(21) Application number: 19205444.3
(22) Date of filing: 25.10.2019
(51) Int. Cl.: B29C 64/118, B33Y 70/10, B33Y 80/00, B29C 64/314

(54) **3D-PRINTED MATERIALS WITH IMPROVED MECHANICAL PROPERTIES**

(71) Applicant: Henkel AG & Co. KGaA, 40589 Düsseldorf (DE)
(72) Inventor: Kasper, Dirk, 40597 Düsseldorf (DE); Welters, Tim, 40723 Hilden (DE); Klug, Christian, 40597 Düsseldorf (DE); Scheeren, Thomas, 52525 Heinsberg (DE); Schiel, Manuel, 40219 Düsseldorf (DE); Lepa, Klaus, 53842 Troisdorf (DE); Kinscheck, Isabel, 42781 Haan (DE)

(57) **Abstract**

The present invention lies in the field of 3D printing methods and three-dimensional objects obtained from such 3D printing methods. In particular, the invention relates to 3D printing methods for the production of a 3D object in a layer-by-layer manner, wherein a printable composition comprises at least two thermoplastic polymers where a first thermoplastic polymer has a higher viscosity than a second thermoplastic polymer.

## Description

The present invention lies in the field of 3D printing methods and three-dimensional objects obtained from such 3D printing methods. In particular, the invention relates to 3D printing methods for the production of a 3D object in a layer-by-layer manner, wherein a printable composition comprises at least two thermoplastic polymers where a first thermoplastic polymer has a higher viscosity than a second thermoplastic polymer under printing conditions.

In 3D printing applications, also referred herein as additive manufacturing, a wide variety of polymeric materials are used. In various applications, three-dimensional objects are formed in a layer-by-layer manner, i.e. by repeatedly printing material layers on top of each other to form the desired object. Many of the existing polymeric compositions for 3D printing are liquid or are liquefied for the actual printing to occur, for example by melting, and solidify after being printed, for example in the form of filaments. Each deposited line of printed layer is typically composed of polymeric compositions, with the polymer chains holding together tightly thus providing mechanical strength, toughness, and stiffness to the printed line. However, as additional layers are deposited, it is difficult to get the same amount of entanglement between the individual layers. This produces junctions in the inter-filament bonding regions that are significantly less strong and less stiff. Because of this, the printed object is strongest in the direction of the deposited layer and less strong along the axes orthogonal to the deposited layer.

In various known 3D printing applications, the printable composition is melted and then is printed in form of a first layer. Subsequently, a second layer is printed where the second layer is layered on top of the previous layer thus creating adhesion (not necessarily chemical). The layers are typically not fully adhered together, i.e. to each other. Even when the previous layer is still partially melted, the surrounding layers are often only partially adhered to their neighboring layers. As a result, the 3D printed objects tend to have different mechanical properties based on the direction of mechanical stress they are subjected to and sometimes less dense than a similar object produced via alternative methods, such as injection molding. It can also be difficult to produce watertight objects with 3D printing for the same reason; there are microscopic cavities between each layer.

In 3D printing applications that are used for forming objects in a layer-by-layer manner, the degree of isotropy is based on the materials used in the formed object. It is thus generally desirable to provide 3D printing materials in a printing composition that form an object having a high degree of isotropy.

The present invention meets this need by providing a method for additive manufacturing that uses at least two thermoplastic polymers where a first thermoplastic polymer has a higher viscosity than a second thermoplastic polymer under printing conditions.

In a first aspect, the present invention relates to a method for additive manufacturing a three-dimensional part, wherein the method comprises
(i) providing a printable composition comprising at least two thermoplastic polymers; wherein the at least two thermoplastic polymers comprise a first thermoplastic polymer having a viscosity higher than the second thermoplastic polymer under printing conditions; and
(ii) printing the mixture in a layer-by-layer manner to manufacture the three-dimensional object.

In another aspect, the invention also relates to the three-dimensional articles, objects, or parts manufactured by use of the methods described herein.

"Additive manufacturing" and "3D printing" are used interchangeably herein to refer to methods for the formation of three-dimensional articles, objects, or parts in which material is joined or solidified, typically under computer control, with material being added together in a layer-by-layer manner. The techniques described herein are generally also known as fused deposition modeling (FDM) or fused filament fabrication (FFF).

"Article", "object", or "part" may be used interchangeably herein to refer to the finished three-dimensional product formed from the additive manufacturing methods described herein, regardless of whether the "article", "object", or "part" is combined with another "article", "object", or "part" after the hardening of the finished three-dimensional product has occurred.

"Layer-by-layer", as used herein, relates to a method of additive manufacturing in which an article, object, or part is produced by printing separate layers on top of each other such that they form the desired shape. It is typically important to achieve sufficient inter-layer adhesion to produce a stable three-dimensional object.

"Print head", as used herein, relates to the part of an apparatus used for depositing the printing material in form of a layer onto a support or an already formed layer. The print head is typically freely movable to allow formation of layers in the desired shape on a substrate (typically by horizontal movement) and print layers on top of already existing layers (typically be retracting the print head in the vertical direction such that the distance to the substrate or printed layer is adjusted to be suitable for printing the next layer). Alternatively, the print head may be fixed and the substrate is moved relative to the print head or both are movable relative to each other. The print head has typically at least one orifice or nozzle through which the printable material is deposited. Herein, the printable material is - under printing conditions - preferably in form of a viscous polymeric composition, so that the print head orifice can resemble an extruder die and the printed material may be in the form of an extrudate strand.

If reference is made herein to a "print head orifice", it is understood that this term also includes embodiments where the print head has more than one opening/orifice. The print head is typically designed such that it allows printing the printable composition with the print head in the form of extrudate strands onto the carrier substrate to form a first layer. For this, as already described above, the print head, the carrier substrate or both may be movable. Typically, the print head is moved over the carrier substrate and extrudate strands are deposited onto the substrate in the desired pattern. The layers are formed by depositing strands next to each other. Once the first layer is formed, the method continues by printing the printable composition with the print head in the form of an extrudate strand onto the first layer to form a second layer. The second layer may be similar to or different in shape relative to the first layer but is formed on top of the first layer. To form the three-dimensional object, the steps of forming a layer on top of the already formed layers may be repeated to form a third, fourth, fifth and subsequent layer. Computer programs exist that allow to devise a layer-by-layer printing process for a given shape or object.

"Extrudate strand", as used herein, relates to the form of the printed/extruded material once it leaves the print heads orifice and forms the layer. The extrudate strand is in form of a strand or fiber (also referred to as filament) that extends in the direction of the movement of the print head. Extrudate strands printed next to each other, for example laterally parallel to each other, can together form one layer (for example, at least a portion of parallel multiple extrudate strands may fuse together to a certain extent), while strands printed on top of an existing strand form the next layer in the layer-by-layer manufacturing process. Said differently, two or more extrudate strands laterally arranged next to each other i.e. in a side-by-side manner, may at least partially fuse together; alternatively, such laterally arranged extrudate strands may not be fused together.

A "composition" is understood in the context of the present invention as a mixture of at least two ingredients.

"Isotropy" is defined herein to mean uniformity of a mechanical and optionally also a physical, optical or chemical property in all directions. For example, an isotropic three-dimensional object would have the same elongations at break or stiffness in the X, Y, and Z directions. An isotropic three-dimensional object has equal strength in all directions, at least with respect to the materials. Isotropy is contrasted to anisotropy, which refers to an object that has physical properties that vary with respect to direction; the three-dimensional object would have different elongations at break or stiffness in the X, Y, and Z directions. The anisotropic object has unequal strength in all directions.

In preferred embodiments, three-dimensional objects are printed using the printing methods described herein where the three-dimensional object is at least isotropic in that its tear resistance ((ultimate) tensile strength) in any one of the X, Y, Z directions differs from the tear resistance in the other two directions by not more than 30%, preferably not more than 20%, most preferably not more than 10 %. As the tear resistance in the Z direction in 3D printed objections obtained according to known methods is typically significantly lower than in the other directions, due to suboptimal inter-layer adhesion, such isotropy is highly desirable and is an advantage of the methods and materials described herein.

"Ductility" is defined as a measure of a material's ability to undergo significant plastic deformation before rupture, which may be expressed as a percent elongation from a tensile test.

Provided reference is made to molecular weights of oligomers or polymers in the present application the values, unless otherwise stated, refer to the number average, i.e., the Mₙ value, and not to the weight average molecular weight M_{w}. The number average molecular weight Mₙ, as well as the weight average molecular weight M_{w}, can be determined according to the present invention by gel permeation chromatography (GPC, also known as SEC) using a styrene standard with tetrahydrofuran (THF) as the eluent according to DIN 55672-1:2007-08, preferably at 23°C or 35°C. Molecular weights of monomeric compounds are calculated based on the respective molecular formula and the known molecular weights of the individual atoms. These methods are known to one skilled in the art.

"At least one," as used herein, refers to 1 or more, i.e., 1, 2, 3, 4, 5, 6, 7, 8, 9, or more. In regard to an ingredient, the term relates to the type of ingredient and not to the absolute number of molecules. "At least one polymer" thus means, for example, at least one type of polymer, i.e., that a type of polymer or a mixture of a number of different polymers can be used. Together with weight data, the term refers to all compounds of the given type, contained in a composition/mixture, i.e., that the composition contains no other compounds of this type beyond the given amount of the relevant compounds.

All percentage data, provided in connection with the compositions described herein, refer to % by weight, based in each case on the relevant mixture, unless explicitly indicated otherwise.

"Consisting essentially of", as used herein, means that the respective composition is composed mainly, i.e. by at least 50% by weight, for example at least 60, 70 or 80 %, of the referenced component(s), as described below.

The invention relates to methods for additive manufacturing a three-dimensional object in a layer-by-layer manner, wherein the method comprises, in a first step, providing a printable composition comprising at least two thermoplastic polymers where the two or more thermoplastic polymers comprise a first thermoplastic polymer having a higher viscosity than a second thermoplastic polymer under printing conditions. The printable composition is then printed in a layer-by-layer manner, typically in the technique known as FDM or FFF in the art, to manufacture the three-dimensional object. It is understood that said printing typically includes printing multiple layers on top of a previous layer to build up the object from the printable material/composition.

"Printing conditions" is defined herein as the conditions necessary for the printable composition to print each layer, such as viscosity, temperature, etc. The temperature for which printing conditions may occur ranges from 150°C independently to 320°C, more preferably from 170 independently to 300 °C, such as 180 independently to 270 °C, in particular 200°C independently to 250°C. The viscosity of a printable composition under printing conditions may range from 800 Pas independently to 50000 Pas, preferably from 1000 Pas independently to 35000 Pas, more preferably from 1100 Pas independently to 6000 Pas, most preferably from 1200 Pas independently to 3000 Pas. Printing conditions may, in various embodiments, involve shear rates of about 800/s. As used herein with respect to a range, "independently" means that any threshold may be used together with another threshold to give a suitable alternative range, e.g. about 150°C independently to about 250°C is also considered a suitable alternative range for the temperature under "printing conditions" based on the above disclosure.

The first thermoplastic polymer and the second thermoplastic polymer as described herein have particular differing viscosities at a given temperature, typically in a temperature range that resembles typical printing temperatures. In various embodiments, the first thermoplastic polymer has a viscosity greater than 2000 Pas, preferably from 2000 Pas independently to 10000 Pas, or more preferably from 2500 Pas independently to 8000 Pas at a temperature of 250°C. It is understood that these viscosities relate to the first polymer as such or the first polymer in the form it is provided but not to the printable composition, as described herein, that comprises both polymers. In various embodiments, the second thermoplastic polymer has a viscosity less than 2000 Pas, preferably from 500 Pas independently to 1800 Pas, or more preferably from 600 Pas independently to 1700 Pas at a temperature of 250°C. It can be preferred that the viscosities of the first and second polymer differ by at least 1500 or at least 2000 Pas or at least 2500 Pas or at least 3000 Pas at any given temperatures in the range of 150 to 275°C.

In various embodiments, the method is not limited to two thermoplastic polymers but may use three, four, or more different thermoplastic polymers, as long as at least one first thermoplastic polymer has a higher viscosity than a second thermoplastic polymer. In various embodiments, it can however be preferred that only two thermoplastic polymers are used.

Each of the thermoplastic polymers, alone or in combination, comprises a polymer base material selected from the group consisting of acrylonitrile butadiene styrene (ABS), acrylonitrile styrene acrylate (ASA), polycarbonate (PC), polylactic acid (PLA), polyethylene , polypropylene, polyethylene terephthalate (PETG), polyphenylsulfone (PPSU) and high impact polystyrene (HIPS), polystyrol (PS), polytetrafluoroethylene (PTFE), polyetherimide (PEI), polyether ether ketone (PEEK), thermoplastic polyurethane (TPU) elastomer, Nylon (PA6/PA66), polyundecanolactam (PA11), polylauryllactam (PA12), poly(p-phenylene ether) (PPE), polyvinylchloride (PVC) and combinations thereof, including hybrid polymers. More concrete examples of such polymeric compositions are described below. The first thermoplastic polymer, the second thermoplastic polymer, or both may preferably be acrylonitrile butadiene styrene (ABS), polycarbonate (PC), and combinations thereof, including hybrid polymers, in particular ABS. In various embodiments, the first and second polymer are the same type of polymer, i.e. are structurally identical and only differ in molecular weight or molecular weight distribution, e.g. chain length or copolymer composition, i.e. monomer ratio.

The first and second thermoplastic polymer are typically non-reactive with each other. "Non-reactive", as used herein, means that the first thermoplastic polymer and/or the second thermoplastic polymer do not react with each other, e.g. do not form covalent bonds with each other, nor do the first thermoplastic polymer and/or the second thermoplastic polymer react with other components within the printable composition. The at least two thermoplastic polymers and optional adhesion promoters do not require chemical curing for this reason; the printable composition may solidify once the temperature of the printable composition decreases. In a preferable embodiment, no chemical curing of the printable composition takes place once the printable composition is printed in a layer-by-layer manner to form the three-dimensional object.

In various embodiments, it can however still be possible to cure other components within the printable composition, for example using radiation, heat and/or moisture.

In various embodiments, the at least two thermoplastic polymers comprise a first thermoplastic polymer and a second thermoplastic polymer, wherein the first thermoplastic polymer and the second thermoplastic polymer comprise the same polymer base component but differ in their viscosity. The first thermoplastic polymer has a higher viscosity than the second thermoplastic polymer under printing conditions.

In a preferred embodiment, both of the first thermoplastic polymer and the second thermoplastic polymer are ABS thermoplastic polymers. The difference between the two ABS thermoplastic polymers is that the first thermoplastic polymer has a higher viscosity than the second thermoplastic polymer under printing conditions. In one embodiment, the first thermoplastic polymer is Novodur HH112. In one embodiment, the second thermoplastic polymer is Novodur H605.

The properties by which the at least two thermoplastic polymers differ may be or include besides viscosity other parameters, such as, without limitation, hardness, electrical conductivity, thermal conductivity, density, elasticity, adhesiveness, light transmittance and combinations thereof. It is understood that the two thermoplastic polymers may differ in one or more of these properties.

The difference in viscosity between the first thermoplastic polymer and the second thermoplastic polymer of the at least two thermoplastic polymers allows for better interfacial strength between vertical layers of the printable composition, for example in the 'Z' direction, once the object has solidified. It is believed, without wishing to be bound to any particular theory, that the lower viscosity polymer serves to repair defects in the interfacial layers that would occur if only the higher viscosity polymer is used, while the higher weight polymer provides for the necessary material performance, in particular the mechanical characteristics, of the printed strands/material.

In various embodiments, the printable composition further includes one or more adhesion promoters, preferably in an amount ranging from 0.1 wt.-% independently to 20 wt.-% relative to the total weight of the printable composition, preferably from 0.3 wt.-% independently to 10 wt.-%, more preferably from 1 wt% independently to 8 wt.-%, or from 0.5 wt.-% independently to 5 wt.-%, or from 0.5 wt.-% independently to 2 wt.-%. In various embodiments, such an adhesion promoter may be any adhesion promoter suitable for this purpose, for example adhesion promoters as typically used in hot melt adhesives. In one embodiment, the adhesion promoter is Tegomer® XP 21010 (Evonik Industries AG).

The desired rheological properties of the printable compositions can be controlled via the viscosity ratio between the at least two thermoplastic polymers.

In various embodiments, the mixing of the at least two thermoplastic polymers occurs within the print head or in a separate mixing unit connected to the print head. It is generally preferred that the compositions disclosed are premixed/pre-formulated before being fed to the printing apparatus. In various embodiments, the printable composition is prepared by extrusion, for example extruded in form of fibers, and then fed into the printing device.

As mentioned above, the print head may be fed with the printable composition (which includes the at least two thermoplastic polymers and optional one or more adhesion promoters and/or tackifiers) that has already been mixed, which is facilitated by a mixing unit that is fed with the at least two thermoplastic polymers (and optional adhesion promoters/tackifier(s)) and then feeds the printable composition to the print head. As the components of the printable compositions are preferably non-reactive with each other, this pre-mixing typically does not start any curing reaction. Alternatively, the print head itself may be designed such that it achieves mixing and printing, for example simultaneously. In such embodiments, the at least two thermoplastic polymers are fed to the print head that then achieves mixing and printing the mixture in a single step. Print heads for such applications are known and commercially available in the art.

In various embodiments, the viscosity of the first thermoplastic polymer at a temperature in the range of 150 to 275°C, such as at 200°C, 225°C or 250°C, for example at 250°C, ranges from 2000 to independently to 10000 Pas, preferably from 2500 independently to 8000 Pas. The viscosity of the second thermoplastic polymer under the same conditions may range from 500 Pas independently to <2000 Pas, preferably from 600 independently to 1800 or 1700 Pas. In various embodiments, the ratio of the viscosity of the first thermoplastic polymer and the second thermoplastic polymer under printing conditions, e.g. at 250°, is at least 1.5:1, preferably at least 1.75:1, more preferably at least 2:1 or 3:1. The upper limit of the ratio may be, in some embodiments, 6:1, 5:1 or 4.5:1. The viscosity is preferably measured as described in the examples.

In various embodiments, the first thermoplastic polymer is present in the printable composition in an amount ranging from 25 wt% independently to 98 wt% relative to the total weight of the printable composition, preferably from 40 wt% independently to 80 wt%, more preferably from 45 wt% independently to 75 wt%. In embodiments, the second thermoplastic polymer is present in the printable composition in an amount ranging from 25 wt% independently to 98 wt% relative to the total weight of the printable composition, preferably from 40 wt% independently to 80 wt%, more preferably from 45 wt% independently to 75 wt%.

In embodiments, the number average molecular weight (Mₙ) of the thermoplastic polymers is up to 100000 Da, for example within a range of about 10000 or 20000 Da to about 100000 Da.

The composition according to the invention may comprise further ingredients in addition to the components mentioned above, which can contribute to imparting the materials with the desired properties.

These include, in principle, all additives known in the prior art and conventional additional ingredients. Such additional ingredients include, but are not limited to, tackifiers, fillers, surfactants, plasticizers, diluents, flow agents, coupling agents, wetting agents, flame retardants, preservatives, stabilizers, defoaming agents, pigments, dyes, moisture scavengers, blowing agents, conductivity imparting agents and light/UV stabilizers. The additives are preferably present in an amount of less than 30 % by weight, in particular less than 15 % by weight, preferably less than 5 % by weight, in each case based on the total printable composition.

In various embodiments, the printable composition further includes one or more tackifier(s), preferably in an amount ranging from 0.1 wt.-% independently to 50 wt.-% relative to the total weight of the printable composition, preferably from 0.3 wt.-% independently to 30 wt.-%, more preferably from 1 wt.-% independently to 20 wt.-%, or from 0.5 wt.-% independently to 15 wt.-%.

Examples of suitable tackifier resins can include natural rosins, rosin esters, modified rosins, hydrogenated rosins, glycerol esters of natural rosins, glycerol esters of modified rosins, pentaerythritol esters of natural rosins, pentaerythritol esters of modified rosins, pentaerythritol esters of hydrogenated rosins, abietic acid, abietic acid esters, copolymers of natural terpenes, three- dimensional polymers of natural terpenes, hydrogenated derivatives of copolymers of hydrogenated terpenes, polyterpene resins, terpene-phenolics, polyterpenes, hydrogenated derivatives of phenol-based modified terpene resins, styrenated terpene, poly-alpha-methylstyrene, phenol-modified styrene polymers, phenol-modified alpha-methylstyrene polymers, resorcinol resins, amorphous petroleum hydrocarbon resins, hydrogenated derivatives of amorphous petroleum hydrocarbon resins, aromatic petroleum hydrocarbon resins, hydrogenated derivatives of aromatic petroleum hydrocarbon resins, cyclic amorphous petroleum hydrocarbon resins and hydrogenated derivatives of cyclic amorphous petroleum hydrocarbon resins. These tackifier resins may be used alone or in combination.

All printable compositions described herein may comprise one or more fillers, although it may be preferred that no filler is used. The filler, may, without limitation, be selected from chalk, powdered limestone, silica, such as precipitated and/or pyrogenic silica, zeolites, bentonites, aluminium hydroxide, magnesium carbonate, kieselguhr, alumina, clay, tallow, titanium oxide, iron oxide, zinc oxide, sand, quartz, flint, mica, powdered glass and other ground minerals. Furthermore, organic fillers can also be used, in particular carbon black, graphite, wood fibers, wood flour, sawdust, cellulose, cotton, pulp, wood chips, chopped straw, chaff, ground walnut shells and other short-cut fibers. Furthermore, short fibers such as glass fibers, glass filament, polyacrylonitrile, carbon fibers, Kevlar fibers or polyethylene fibers can also be added. Aluminum powder is also suitable as a filler. In addition, hollow spheres with a mineral shell or a plastic shell are suitable as fillers. These can be e.g. hollow glass spheres which are commercially available with the trade names Glass Bubbles®. Plastic-based hollow spheres are commercially available, e.g. with the names Expancel® or Dualite®. These are composed of inorganic or organic substances, each with a diameter of 1 mm or less, preferably of 500 µm or less.

The filler(s) may be used in a quantity of 1 to 90 wt.%, for example 5 to 30 wt.%, based on the total weight of the printable composition. An individual filler or a combination of several fillers can be used.

### Examples

Formulations 1-4 were mixed. Table 1 includes the components of each formulation. The conditions pertaining to each formulation are noted in more detail, below. The components of each formulation include a first thermoplastic polymer (e.g. Novodur HH112) and/or a second thermoplastic polymer (Novodur H605) and/or an adhesion promoter (e.g. Tegomer XP 21010).

**TABLE1 :**

| | Polymer 1 (Novodur HH112) | Polymer 2 (Novodur H605) | Adhesion Promoter (Tegomer XP 21010) |
|---|---|---|---|
| Formulation 1 | | 100% | |
| Formulation 2 | 100% | | |
| Formulation 3 | 50% | 50% | |
| Formulation 4 | 49.50% | 49.50% | 1% |

The viscosity of the formulations, in Pa·s, was measured with a Gemini HR-Nano 200 Rheometer (available from Malvern Panalytical GmbH, Kassel, Germany) at the temperature given by means of an forced harmonic oscillation of shear stress using a parallel plates geometry with a plate diameter of 25 mm and a gap size of 1000 µm at start temperature (250°C). During the measurement, the temperature was continuously decreased, starting at a temperature of 250 °C while controlling the normal force to stay close to zero by means of changing the gap size. From the shearing stress and strain data, recorded at a constant oscillation frequency of 1 Hz and a shearing strain amplitude of 1 % the absolute value of the complex viscosity was evaluated. Table 2 shows the viscosity of formulations 1-4 in Pas at different printing temperatures, while other conditions of the formulations were the same for all formulations. Each formulation becomes less viscous as the printing temperature increases.

**TABLE 2:**

| | Viscosity at 150°C | Viscosity at 175°C | Viscosity at 200° C | Viscosity at 225° C | Viscosity at 250° C |
|---|---|---|---|---|---|
| Formulation 1 | 22640 | 9158 | 3556 | 1518 | 734 |
| Formulation 2 | 56239 | 28400 | 12840 | 5853 | 2866 |
| Formulation 3 | 49110 | 21890 | 8896 | 3760 | 1723 |
| Formulation 4 | 35970 | 15810 | 6671 | 2985 | 1487 |

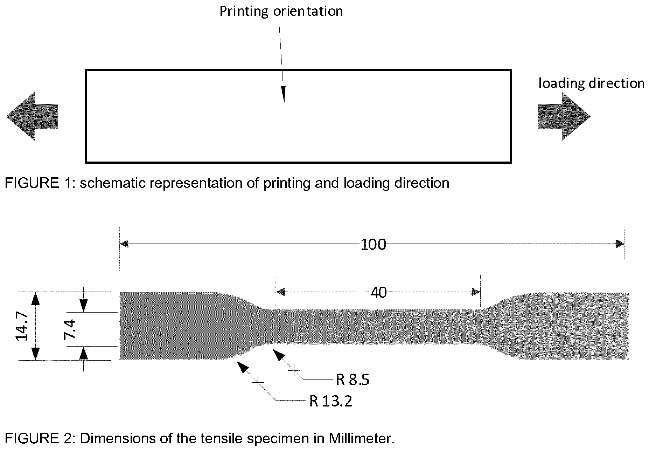

The different formulations were all in the one hand extruded and pressed at 80 °C to plates with a thickness of 4mm and on the other hand printed using every time the same printing parameters. The samples were afterwards tested on the basis of DIN EN ISO 527 as no common standard for testing 3D printed parts is available. A 10kN table top all-round testing machine available at ZwickRoell GmbH & Co. KG, Ulm, Germany was used together with an optical local strain measurement device type BTC-EXOPTIC.006 available at the same manufacturer. The main parameters for the printing are summarized in Table 3 whereas the testing parameters can be found in Table 4. Figure 1 illustrates the printing as well as the loading direction used to perform the mechanical tests. Figure 2 shows the dimension of the test specimen cut from the bulk plates and printed for printed parts, relating to a type 5a test specimen, wherein the thickness is 4 mm. The bulk samples represent the ideal form with respect to isotropy of tear resistance and, as proven by tests, the bulk samples show a similar tensile strength behaviour as a printed part tested in X direction (the tensile strength has been measured along with the printing direction / 0°C). The test specimen prepared form the printed parts can serve as examples for the tear resistance in Y and in principle also Z direction.

**TABLE 3:**

| **Parameter** | **Value** |
|---|---|
| Printer | Lulzbot TAZ 6, Single Extruder |
| Bed Temperature | 100 °C |
| Nozzle Temperature | 250 °C |
| Nozzle Diameter | 0.5mm |
| Extrusion Width | 0.2mm |
| Layer Height | 0.2mm |
| No. of Outlines | 1 |
| Orientation vs. loading direction | 90° |
| Filament Diameter | approx. 2.85mm |
| Printing Speed | 1800 mm/min |

**TABLE 4**

| **Parameter** | **Value** |
|---|---|
| Testing Speed | 5 mm/min |
| Clamping length | 65 mm |
| Gauge length | 25 mm |
| Evaluation of Young's Modulus | Linear regression from 0.05 - 0.25% elongation |

Results of mechanical tensile tests of formulations 1-4 conducted using the parameters described in Table 4.

**TABLE 5:**

| | **Bulk sample** | | **Printed sample** | |
|---|---|---|---|---|
| | **Tensile Strength [MPa]** | **Elongation at break [%]** | **Tensile Strength [MPa]** | **Elongation at break [%]** |
| Formulation 1 | 36,4 | 6,4 | 33,0 | 10,5 |
| Formulation 2 | 38,8 | 33,0 | 39,1 | 7,4 |
| Formulation 3 | 35,6 | 42,6 | 35,5 | 21,5 |
| Formulation 4 | 34,9 | 20,0 | 33,3 | 35,2 |

While the Young's Modulus stays for all samples in the region of 2000 to 2500 MPa, the elongation at break significantly increases when the two thermoplastic polymers are combined together as illustrated from the results of Formulation 3 compared with the results of formulation 1 and 2. That can be observed as well for the bulk sample as also for the printed sample. However, the elongation at break increases even more when a tackifier is included with the two thermoplastic polymers, as illustrated from the results of Formulation 4 (See Table 3).

The comparison of the results of the bulk samples with the results of the printed samples demonstrated that the formulation with the combination of thermoplastic polymer show superior properties with a high tear resistance isotropy.

As can be seen from the data in TABLES 1, 2 and 5, the combination of the at least two thermoplastic polymers significantly improve the elongation at break and strength as compared to the same data for each individual thermoplastic polymers. The inclusion of an adhesion promoter, in combination with the two thermoplastic polymers, improves the performance even more, especially in terms of elongation at break, as compared to the same data for the combination of the two thermoplastic polymers in the absence of the adhesion promoter.

While specific aspects have been described, it should be understood by those skilled in the art that various changes in form and detail may be made therein without departing from the spirit and scope of the aspects of this disclosure as defined by the appended claims. The scope is thus indicated by the appended claims and all changes that come within the meaning and range of equivalency of the claims are therefore intended to be embraced.

## Claims

1. A method for additive manufacturing a three-dimensional object, wherein the method comprises:
(i) providing a printable composition comprising at least two thermoplastic polymers; wherein the at least two thermoplastic polymers comprise a first thermoplastic polymer and a second thermoplastic polymer; wherein the first thermoplastic polymer has a viscosity higher than the second thermoplastic polymer under printing conditions; and
(ii) printing the printable composition in a layer-by-layer manner to manufacture the three-dimensional object.

2. The method of any one of the preceding claims, wherein the viscosity of the first thermoplastic polymer at 250°C is greater than 2000 Pas, preferably ranges from 2000 to 10000 Pas.

3. The method of any one of the preceding claims, wherein the viscosity of the second thermoplastic polymer at 250°C is less than 2000 Pas, preferably ranges from 500 to <2000 Pas.

4. The method of any one of the preceding claims, wherein the ratio of the viscosity of the first thermoplastic polymer and the second thermoplastic polymer at 250°C is at least 1.5:1.

5. The method of any one of the preceding claims, wherein
(a) the first thermoplastic polymer is present in the printable composition in an amount ranging from 25 wt% to 98 wt% relative to the total weight of the printable composition; and/or
(b) the second thermoplastic polymer is present in the printable composition in an amount ranging from 2 wt% to 75 wt% relative to the total weight of the printable composition.

6. The method of any one of the preceding claims, further comprising one or more adhesion promoter preferably in an amount ranging from 0.1 wt.-% to 20 wt.-% relative to the total weight of the printable composition.

7. The method of any one of the preceding clams, wherein the first thermoplastic polymer, the second thermoplastic polymer, or both are a copolymer having a polymer base material selected from the group consisting of acrylonitrile butadiene styrene (ABS), acrylonitrile styrene acrylate (ASA), polycarbonate (PC), polylactic acid (PLA), polyethylene , polypropylene, polyethylene terephthalate (PETG), polyphenylsulfone (PPSU) and high impact polystyrene (HIPS), polystyrol (PS), polytetrafluoroethylene (PTFE), polyetherimide (PEI), polyether ether ketone (PEEK), thermoplastic polyurethane (TPU) elastomer, Nylon (PA6/PA66), polyundecanolactam (PA11), polylauryllactam (PA12), poly(p-phenylene ether) (PPE), polyvinylchloride (PVC) and combinations thereof, including hybrid polymers, preferably acrylonitrile butadiene styrene (ABS), polycarbonate (PC), and combinations thereof, including hybrid polymers, in particular ABS.

8. The method of any one of the preceding claims, wherein the printable composition further comprises at least one additive selected from the group tackifiers, fillers, surfactants, plasticizers, diluents, flow agents, coupling agents, wetting agents, flame retardants, preservatives, stabilizers, defoaming agents, pigments, dyes, moisture scavengers, blowing agents, conductivity imparting agents and light/UV stabilizers.

9. The method of any one of the preceding claims, wherein the at least two thermoplastic polymers further differ from each other by at least one parameter selected from the group comprising hardness, density, elasticity, adhesiveness, and combinations thereof.

10. The method of any one of the preceding claims, wherein the printing step is carried out at a temperature at which the at least two thermoplastic polymers are present in a molten state.

11. A three-dimensional object obtainable by the method of any one of claims 1 to 10.

12. The three-dimensional object of claim 11, wherein the three-dimensional object is at least isotropic in that its tear resistance in any one of the X, Y, Z directions differs from the tear resistance in the other two directions by not more than 30 %, preferably not more than 20 %.

13. A printed three-dimensional object comprising:
(i) a first thermoplastic polymer;
(ii) a second thermoplastic polymer; wherein the first thermoplastic polymer has under printing conditions a viscosity higher than the second thermoplastic polymer; and
wherein the printed three-dimensional object is isotropic in that its tear resistance in any one of the X, Y, Z directions differs from the tear resistance in the other two directions by not more than 30 %, preferably not more than 20 %, most preferably more not than 10 %.
